# EUROPEAN PATENT APPLICATION

(11) **EP 1 607 890 A1**
(43) Date of publication of application: **21.12.2005**
(21) Application number: 04076801.2
(22) Date of filing: 18.06.2004
(51) Int. Cl.: G06F 17/60

(54) **Preservation of fixed pegging**

(71) Applicant: SAP AG, 69190 Walldorf (DE)
(72) Inventor: Reinelt, Klaus, 76703 Kraichtal (DE); Hetzer, Stephan, 74918 Angelbachtal (DE); Siebert, Stefan, 68766 Hockenheim (DE); Schumacher, Thomas, 69120 Heidelberg (DE); Glania, Christoph, 69242 Mühlhausen-Rettigheim (DE); Engel, Peter, 69126 Heidelberg (DE); Pecht-Seibert, Guenter, 69242 Mühlhausen (DE); Kulick, Thorsten, 64625 Bensheim-Schönberg (DE); Altmeyer, Joachim, 69181 Leimen (DE); Doerfler, Andre, 68167 Mannheim (DE)
(74) Representative: Winckels, Johannes Hubertus F.

(57) **Abstract**

A method for providing a planning framework for use in managing a material flow of products in a supply chain. According to the method, subsequent instances of said material flow are associated with linked documents in a document flow. In a prior document, first relations are established identifying one or more dependent documents, for producing one or more products in a next instance of said material flow. Said prior document is converted into said next document in a forward way. According to the invention, the method comprises establishing in said next document the first relations identifying said one or more dependent documents , so as to convert said next document into said prior document in a reverse way. In this way, fixed relations can be preserved between product requirements and products while changing the material flow.

## Description

The invention relates to a method for providing a planning framework for use in managing a material flow to be planned in a supply chain.

Typically, in a supply chain planning strategy, an aspect is inventory management, which can be defined as bringing requirement tasks in conformity with available stock, in other words, matching a supply and demand of goods in a production chain where available stock is used to cover stock requirements.

A further aspect of this matching supply and demand of material goods is keeping track material flow, wherein order prescriptions are met with available stock batches. In this respect, the major enterprises where planning of material flow plays a crucial role in the production and manufacturing of goods, which encompasses almost all branches of the industry, use IT-systems such as for example supply chain management systems developed by SAP AG.

Certain functional features of these IT-systems may be involved with structures that describe the material flows between product receipt documents (purchase orders, purchase requisitions, planned orders, production orders and stocks) and product requirement documents (sales orders, planned independent requirements, dependent requirements and stock transport requirements). The assignment of material flows between product requirement documents and product receipt documents is also referenced as "pegging". Hence, if a material flow is possible between two documents, a pegging relationship is present between said documents. Such possibility exists for example, if the product, location, account assignment and planning version of the orders are the same. If this is not the case, a pegging relationship is not present.

The quantities of product receipt documents and product requirement documents can deviate from each other. A product requirement document may have to be covered by several product receipt documents. A product receipt document can also cover several product requirement documents. The relationship between product receipt documents and product requirement documents is therefore an n:n relationship. In this respect, the succession from a prior product requirement document in a first instance of a document flow to a next product requirement document in a next instance of the document flow is related in a way so that, from the prior product requirement document, the supply chain management program generates a next product requirement document in a next instance of the document flow.

Thus a document flow is produced by representing subsequent instances of said document flow as linked nodes in a network, wherein the nodes are objects representing documents at the requirement and receipt side of the supply chain.

In this way, forwardly, the material flow of products is represented as pegging relations in a said document flow, which identify that relate prior product requirements to next product requirements. If, for example, one document flow is created at the requirement side and another at the receipt side, pegging relations can be used to describe the material flow between both document flows.

One of the problems associated with these pegging relationships is the fact that they are heavily dependent on an actual planning. That is, if in the planning a particular item is changed, that is, an order is cancelled or a stock becomes unavailable, the pegging relationships are destroyed and a deficiency arises in the way a material flow is monitored. This gives rise to stock problems, which may cause over or under stocking of materials. These problems can cause a big problem for actually executing a particular process according a planning status prescribed by the system if stock is not available at the time and places when needed, or if the stock becomes redundant if orders are cancelled. Also, in a material flow, the planning order gives rise to conversions, that have to be accounted for in the planning. For instance, a purchase requisition may have to be converted in a purchase order, wherein several requisitions may be combined in one order. This involves canceling of the requisitions and adding of orders in the material flow. To keep track of the pegging relationships under such conditions has hitherto not been made available.

It is therefore an object of the invention to provide a method and system that copes with the above described problems and that provides a robust solution for keeping track of material flow, even when specific items in these flows are added or cancelled.

To this end, the invention provides a method according to the features of claim 1. By establishing in said next document, said first relations identifying said one or more first dependent requirement documents, said next document can be converted back into said prior document in a reverse transition, while keeping pegging relations intact Hence, in reverse mode, the material flow can be rebuilt if a particular product requirement is cancelled or altered due to changes in an actual material flow planning, so that fixed relations can be preserved between product requirements and products while changing the material flow.

Thus, by preservation of these prior pegging relationships, the relationships can be maintained even if in actual planning changes, certain pegging relations have to be re-established. Note that this is not the same as identifying anew these pegging relations dynamically, since in such case, the relationships are built without using information regarding the old pegging relationships.

By such a framework, the invention is able to offer an environment where a planning framework maintained and generated effectively and the material flow in the supply chain can be monitored more effectively. Furthermore, the invention provides a computer system according to claim 9. The invention also provides a computer program product according to claim 11, and an article of manufacture according to claim 12.

The invention will be further elucidated with reference to the accompanying drawing. In the figures:
Figure 1 displays a first scenario according to the method of the invention;
Figure 2 displays a chain of sequence steps for performing the scenario in Figure 1;
Figure 3 displays a second scenario according to the method of the invention;
Figure 4 displays a third scenario according to the method of the invention;
Figure 5 displays an examplary fourth scenario in sequential steps according to the method of the invention.

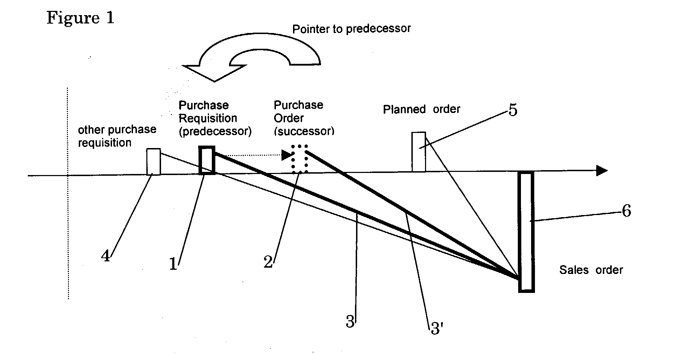

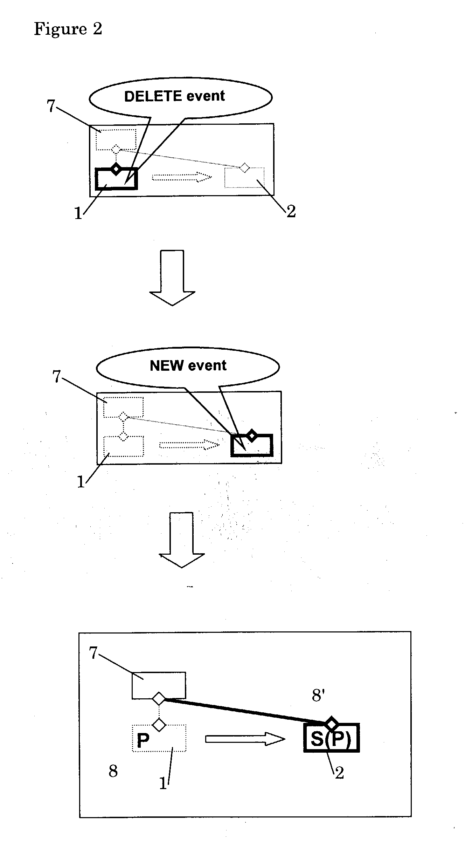

Turning now to Figure 1, a purchase requisition 1 is to be converted in a purchase order 2 while pegging relations 3 are converted into 3' intact. In this aspect, the term purchase order can be described as a request or instruction from a purchasing organization to a vendor (external supplier) or a plant to deliver a certain quantity of a product or to perform certain services at a certain point in time. Such a purchase order 2 may exist in a supply chain management program in the form of a node in a document flow. Prior to the purchase order 2, a requirement may be registered in the supply chain management program as an undecided proposal to purchase some product. Such purchase requisitions 1 may also be created automatically. Thus, sequentially, in a material flow, a purchase requisition 1 is to be converted into a purchase order 2, which results in additions and deletions of the aforementioned network representing the material flow as will be further explained with reference to Figure 2. Specifically, the purchase requisition 1 is the predecessor of the purchase order 2 in such a network, and pegging relationships are identified that relate the prior product requirement (purchase requisition 1) to next product requirement (purchase order 2). Thus, the product requirements (1, 2) are formed as nodes in a network, representing subsequent instances or stages in the flow. In this aspect, product requirements 1, 2 are used to list a category of products that are required for a subsequent stage in the material flow, so that, in the example in Figure 1, the purchase requisition 1 and subsequent purchase order 2 are both viewed generally as "product requirements" that are changed in the course of the documents flow/material flow. In the document flow, the purchase requisition 1 is deleted and converted into a purchase order 2 by adding a new product requirement in the form of the purchase order 2. In the next instance of the material flow, this purchase order 2 may be combined with other purchase requisitions 4 (or converted counterparts) and planned orders 5 into a final sales order 6.

To preserve the material flow to the sales order 6, the fixed pegging relationships must be reassigned to the successor purchase order 2. The successor purchase order 2 therefore, according to the invention, identifies the pegging relations 3 of the purchase requisition 1 identifying the required products, so as to be able to generate the product requisition from the purchase order in a reverse way and to transfer the pegging relations from the purchase requisition 1 to the purchase order 2. In this way, in the purchase order 2 the predecessor 1 is identified as a new parameter. This information points to the correct purchase requisition 1, from which the quantities of material flow are to be taken over.

Figure 2 shows the subsequent steps of addition and deletion of product requirement nodes 1, 2 and 3 in the document flow network indicated before. The example concerns handling a transition in the document flow wherein a purchase requisition 1 is converted into a purchase order 2. To this end, product requirements are represented as nodes 7 in a document flow 8. Thus, the transition is realized by deleting, in a first function call the node representing the purchase requisition 1, after collecting the node 1 being the predecessor P of node 2, identified as the successor S(P) of the predecessor P in the buffer. Thus, in the buffer the purchase requisition P and the pegging relationships thereof are temporarily stored.

Then, in a second remote function call a new node 2 is added to the flow 8, representing the purchase order. Further, the node of purchase order 2 and predecessor information of purchase requisition 1 are collected into the buffer.

This next function call triggers re-calculation of the fixed pegging relationships, wherein all affected document nodes are determined and sorted by predecessor information. The result is a new node representing the purchase order 2, with pegging relationships kept intact. Alternatively, first and second function calls could be executed in reverse order, so that first the purchase order node 2 is added prior to deleting the purchase requisition node 1.

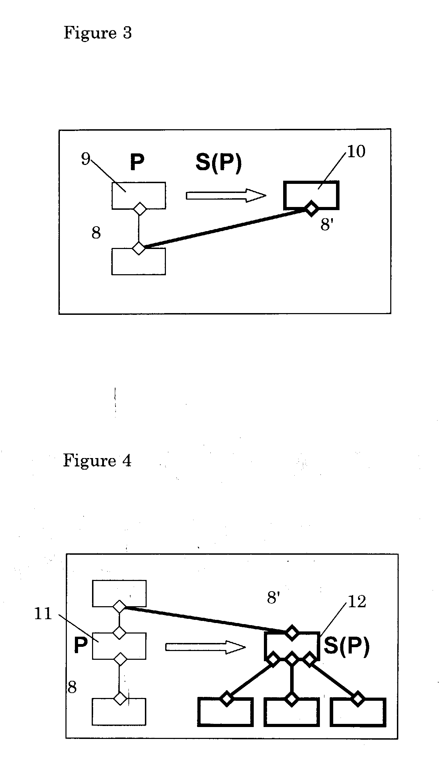

Figure 3 shows another scenario wherein the pegging relationships are kept intact according to the method of the invention. While the document flow scenario represented in Figures 1 and 2 concern transitions art the receipt side (in the example: a conversion of a purchase requisition into a purchase order), also at the requirement side these transitions may occur and pegging relations may be wanted to be kept intact. Thus Figure 3 shows the transitions of for example a sales order 9 into a delivery 10. Also here, the sales order 9 is the predecessor P of the delivery 10 S(P). The conversion in the document flow network 8 is handled in a way similar as illustrated with reference to Figure 2.

Figure 4 shows another scenario where pegging relationships are modified. In this example, in for example in-house production, a batch production order 11 is converted for creating splitted dependent requirement documents to split the material flow into smaller units, for example, to be in correspondence with existing resources. Thus in the prior configuration 8, the batch is not split and pegging relations are identified in the production order 11. In the transition, the document flow is split into three in a next configuration 8', and pegging relationships are maintained in the modified batch production order 12, being the successor S(P) of the predecessor P, the prior production order 11.

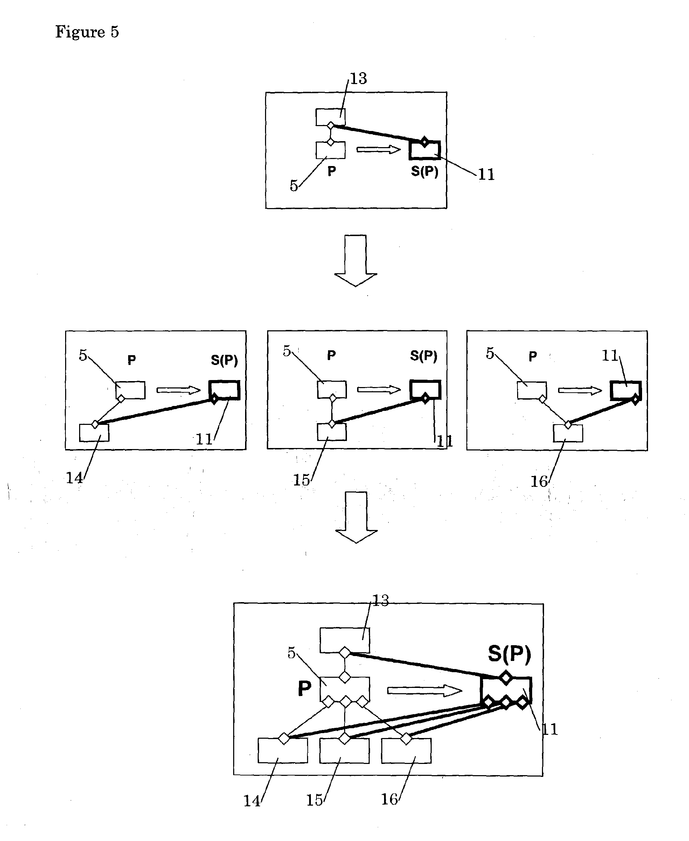

In Figure 5 pegging relations of several documents are combined into one follow on document S(P). This scenario may occur when for example a planned order 5 (P) is converted into a production order S(P), similar to the combination explained in Figure 1 concerning the combination of several purchase requisitions 1, 4. In the first step, the order output 13 (for example, a sales order) is examined and pegging relations are transferred from the planned order 5, the predecessor P, to the successor S(P), that is, for example, the production order 11.

In a next step, the inputs are examined, and a first order input 14 (for example, stock documents) is examined. Then, a next order input 15 and a third order input 16 are examined and pegging relations are transferred to the successor 11.

While the invention is described with reference to the embodiments disclosed in the figures it is no way limited thereto but only is presented for illustrative purposes. The computational aspects described here can be implemented in digital electronic circuitry, or in computer hardware, firmware, software, or in combinations of them. Where appropriate, aspects of these systems and techniques can be implemented in a computer program product tangibly embodied in a machine-readable storage device for execution by a programmable processor, and method steps can be performed by a programmable processor executing a program of instructions to perform functions by operating on input data and generating output.

The invention may also be implemented in an article of manufacture with a computer usable medium having computer readable instructions embodied therein for providing access to resources available on that computer, the computer readable instructions comprising instructions to cause the computer to perform a part of a method according to the invention. The invention may also be implemented as a computer program for running on a computer system, at least including code portions for performing steps of a method according to the invention when run on a computer system or enabling a general propose computer system to perform functions of a filter device according to the invention. Such a computer program may be provided on a data carrier, such as a CD-ROM or diskette, stored with data loadable in a memory of a computer system, the data representing the computer program. The data carrier may further include a data connection, such as a telephone cable or a wireless connection transmitting signals representing a computer program according to the invention.

It should be noted that those skilled in the art will be able to design alternatives without departing from the scope of the appended claims.

In the claims, any reference signs placed between parentheses shall not be construed as limiting the claim. The word 'comprising' does not exclude the presence of other elements or steps than those listed in a claim. The word 'a' is used as an equivalent of 'one or more' or 'at least one'.

## Claims

1. A method for providing a planning framework for use in managing a material flow of products in a supply chain, comprising:
- associating subsequent instances of said material flow with linked documents in a document flow;
- establishing in a prior instance of said document flow, in a prior document, first relations identifying one or more dependent documents, for producing one or more products in a next instance of said material flow;
- converting said prior document into a next document in a forward transition; and
- establishing in said next document, said first relations identifying said one or more first dependent documents, so as to convert said next document into said prior document in a reverse transition.

2. A method according to claim 1, wherein said document transition between said first instance and said next instance in said document flow represents a conversion of a product requirement document at a requirement side of the material flow.

3. A method according to claim 2, wherein said product requirement document is a sales order to be converted into a delivery document.

4. A method according to claim 1, wherein said document transition between said first instance and said next instance in said document flow represents a conversion of a product receipt document at a receipt side of the material flow.

5. A method according to claim 4, wherein said product receipt document is a purchase requisition to be converted into a purchase order.

6. A method according to claim 1, wherein said document transition between said first instance and said next instance in said document flow represents converting a document to a plurality of documents associating splitting of said material flow.

7. A method according to claim 6, wherein said document is a in-house production order that is converted for creating splitted dependent requirement documents.

8. A method according to claim 1, wherein said document transition between said first instance and said next instance in said document flow represents the generation of a follow on document concerning receipt and requirement document nodes.

9. A computer system for providing a planning framework for use in managing a material flow of products in a supply chain, comprising:
- a computer architecture representing subsequent instances of said material flow as linked documents in a document flow;
- a module operative on said computer architecture, arranged to establishing in a prior instance of said document flow, in a prior document, first relations identifying one or more first dependent documents, for producing one or more products in a next instance of said material flow;
- said module further arranged to convert said prior document into a next document in a forward transition; wherein said module is further arranged to
- establishing in said next document, said first relations identifying said one or more first dependent documents, so as to convert said next product requirement into said prior in a reverse transition.

10. A computer system according to claim 9, comprising a client-system at which user interface is present and at least one server-system communicatively connected to said client-system, which server-system is arranged for comprising said architecture and arranged for running said modules.

11. A computer program product, comprising program code portions for performing steps of a method as claimed in any one of claims 1 - 8, when run on a programmable apparatus.

12. An article of manufacture with a computer usable medium having computer readable instructions therein for providing access to resources available on that computer, the computer readable instructions comprising to cause the computer to perform the steps of a method as claimed in any one of claims 1- 8.
